# EUROPEAN PATENT APPLICATION

(11) **EP 4 815 288 A1**
(43) Date of publication of application: **30.09.2026**
(21) Application number: 25769599.9
(22) Date of filing: 07.03.2025
(51) Int. Cl.: H02M 7/12

(54) **POWER CONVERSION CIRCUIT**

(30) Priority: 14.03.2024 JP 2024040047
(71) Applicant: Murata Manufacturing Co., Ltd., Nagaokakyo-shi, Kyoto 617-8555 (JP)
(72) Inventor: BHAGAT, Chinmay, Nagaokakyo-shi, Kyoto 617-8555 (JP); ISHIKURA, Yuki, Nagaokakyo-shi, Kyoto 617-8555 (JP); YAMAMOTO, Yuta, Nagaokakyo-shi, Kyoto 617-8555 (JP)
(74) Representative: Lorenz Seidler Gossel Part. mbB
(86) International application number: PCT/JP2025/008417
(87) International publication number: WO 2025/192449

(57) **Abstract**

A power conversion circuit includes a first switching circuit, a transformer, a second switching circuit, an output smoothing capacitor, an inductor, and a controller. The first switching circuit includes a plurality of bidirectional switches, and is configured to convert a three-phase AC voltage. The transformer includes a primary-side coil and a secondary-side coil. The primary-side coil is connected to an output of the first switching circuit. The second switching circuit includes a rectifier switching element, and is configured to output a DC voltage. The output smoothing capacitor and the inductor are connected to an output terminal of the second switching circuit. The controller is configured to control the first switching circuit and the second switching circuit. The controller is configured to, when an output current of the second switching circuit is less than a first threshold, turn off synchronous rectification for the rectifier switching element of the second switching circuit.

## Description

### Technical Field

The present invention relates to a power conversion circuit configured to convert three-phase alternating-current (AC) power into direct-current (DC) power and output the DC power.

### Background Art

Patent Document 1 describes a control method for controlling a matrix rectifier. The control method in Patent Document 1 converts commercial AC power into DC power by executing switching control of the matrix rectifier in accordance with a vector sequence during the first 30-degree sector of each 60-degree interval of input phases A, B, and C.

### Citation List

### Patent Document

Patent Document 1: U.S. Patent Application Publication No. 2018/0262103

### Summary of Invention

### Technical Problem

However, an issue arises with the control method in Patent Document 1 when the method is used with a light load connected to the matrix rectifier. In this case, an unintended current may flow into a secondary-side rectifier circuit in some situations, such as under low output power conditions.

Accordingly, it is an object of the present invention to reduce the possibility of an unintended current flowing into the secondary-side rectifier circuit.

### Solution to Problem

A power conversion circuit according to an embodiment of the present invention includes a first switching circuit, a transformer, a second switching circuit, an output capacitor, an inductor, and a controller. The first switching circuit includes a plurality of bidirectional switches, and is configured to convert a three-phase AC voltage. The transformer includes a primary-side coil and a secondary-side coil. The primary-side coil is connected to an output of the first switching circuit. The second switching circuit includes a rectifier switching element, and is configured to output a DC voltage. The output capacitor and the inductor are connected to an output terminal of the second switching circuit. The controller is configured to control the first switching circuit and the second switching circuit. The controller is configured to, when an output current of the second switching circuit is less than a first threshold, turn off synchronous rectification for the rectifier switching element of the second switching circuit.

The configuration mentioned above reduces the possibility that an unintended current different from that during normal rectification may flow through the secondary-side switching circuit under low output current conditions. Advantageous Effects of Invention

The present invention makes it possible to reduce the possibility of an unintended current flowing into the secondary-side rectifier circuit.

### Brief Description of Drawings

[Fig. 1] Fig. 1 is a circuit diagram of a power conversion circuit according to a first embodiment of the present invention.
[Fig. 2] Fig. 2 illustrates an example of the ON/OFF settings of switching elements, an example of a primary-side voltage Vp (design value), and an example of a secondary-side voltage Vs (design value), in a plurality of control states within one sector.
[Fig. 3] Fig. 3 illustrates an example of normal current flow under non-light load conditions.
[Fig. 4] Fig. 4 is a waveform diagram illustrating an example of the primary- and secondary-side voltages and primary- and secondary-side currents of a transformer under non-light load conditions.
[Fig. 5] Figs. 5(A), 5(B), and 5(C) each illustrate an example of commutation under non-light load conditions.
[Fig. 6] Fig. 6 illustrates an example of abnormal current flow under light load conditions in a reference power conversion circuit.
[Fig. 7] Fig. 7 is a waveform diagram illustrating an example of the primary- and secondary-side voltages and primary- and secondary-side currents of the transformer under light load conditions and when an abnormal current occurs in a reference power conversion circuit.
[Fig. 8] Figs. 8(A) and 8(B) each illustrate an example of a case where it is not possible to perform commutation normally under light load conditions in a reference power conversion circuit.
[Fig. 9] Fig. 9 illustrates an example of the ON/OFF settings of switching elements, an example of the primary-side voltage Vp (design value), and an example of the secondary-side voltage Vs (design value), in a plurality of control states within one sector under light load conditions.
[Fig. 10] Fig. 10 illustrates an example of abnormal current flow under light load conditions in the power conversion circuit according to the first embodiment of the present invention.
[Fig. 11] Fig. 11 is a circuit diagram of a power conversion circuit according to a second embodiment of the present invention.
[Fig. 12] Fig. 12(A) illustrates an example of the waveforms of control signals for rectifier switching elements when synchronous rectification is ON, Fig. 12(B) illustrates an example of the waveforms of control signals for rectifier switching elements when synchronous rectification is OFF, and Fig. 12(C) illustrates an example of the waveforms of control signals for rectifier switching elements during switching of synchronous rectification from OFF to ON.
[Fig. 13] Fig. 13(A) illustrates an example of the envelope of the waveform of the primary-side current of the transformer when the control in Fig. 12(C) is performed, and Fig. 13(B) illustrates (as a reference) an example of the envelope of the waveform of the primary-side current of the transformer when the control in Fig. 12(C) is not performed.
[Fig. 14] Fig. 14 is a circuit diagram of a power conversion circuit according to a third embodiment of the present invention.

### Description of Embodiments

### [First Embodiment]

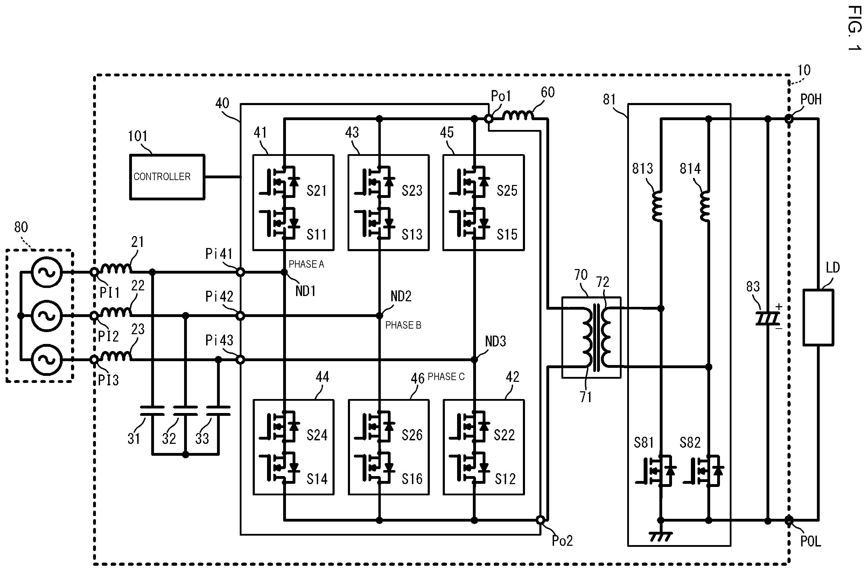

A power conversion circuit according to a first embodiment of the present invention will now be described with reference to the drawings. Fig. 1 is a circuit diagram of the power conversion circuit according to the first embodiment of the present invention.

As illustrated in Fig. 1, a power conversion circuit 10 includes a plurality of input terminals PI1, PI2, and PI3, a high-side DC output terminal POH, and a low-side DC output terminal POL.

The input terminals PI1, PI2, and PI3 are connected with a three-phase AC power source 80. The frequency of input power (an input voltage and an input current) is, for example, 60 Hz. The input terminals PI1, PI2, and PI3 receive input of voltages of the corresponding phases (phases A, B, and C). These voltages have a phase difference of 120 degrees. For each of the input terminals PI1, PI2, and PI3, the input voltage is, for example, on the order of 200 V to 500 V, and the input current is on the order of 30 A.

The power conversion circuit 10 is configured to convert three-phase AC power input from the input terminals P11, P12, and P13 into DC power (a DC output voltage and a DC output current), and output the DC power from the high-side DC output terminal POH and the low-side DC output terminal POL. The output power is supplied to a load LD, which is connected to the high-side DC output terminal POH and the low-side DC output terminal POL.

The power conversion circuit 10 includes a plurality of filter inductors 21 to 23 (a filter inductor 21, a filter inductor 22, and a filter inductor 23), a plurality of filter capacitors 31 to 33 (a filter capacitor 31, a filter capacitor 32, and a filter capacitor 33), a switching circuit 40, a resonant inductor 60, a transformer 70, a rectifier circuit 81, an output smoothing capacitor 83, and a controller 101. The switching circuit 40 corresponds to a "first switching circuit" of the present invention.

The filter inductor 21, the filter inductor 22, and the filter inductor 23 are similar or identical to each other in configuration. The filter capacitor 31, the filter capacitor 32, and the filter capacitor 33 are similar or identical to each other in configuration.

The switching circuit 40 includes switching-circuit input terminals Pi41, Pi42, and Pi43, and switching-circuit output terminals Po1 and Po2.

The switching circuit 40 includes a plurality of high-side bidirectional switching elements 41, 43, and 45 (a high-side bidirectional switching element 41, a high-side bidirectional switching element 43, and a high-side bidirectional switching element 45), and a plurality of low-side bidirectional switching elements 42, 44, and 46 (a low-side bidirectional switching element 42, a low-side bidirectional switching element 44, and a low-side bidirectional switching element 46).

The high-side bidirectional switching element 41 includes a switching element S11 and a switching element S21. The high-side bidirectional switching element 43 includes a switching element S13 and a switching element S23. The high-side bidirectional switching element 45 includes a switching element S15 and a switching element S25.

The low-side bidirectional switching element 42 includes a switching element S12 and a switching element S22. The low-side bidirectional switching element 44 includes a switching element S14 and a switching element S24. The low-side bidirectional switching element 46 includes a switching element S16 and a switching element S26.

The switching elements S11 to S16 (S11, S12, S13, S14, S15, and S16) and S21 to S26 (S21, S22, S23, S24, S25, and S26) are implemented by power semiconductor elements, and each include a body diode.

The respective source terminals of the switching elements S11 and S21, which constitute the high-side bidirectional switching element 41, are connected to each other. The respective source terminals of the switching elements S14 and S24, which constitute the low-side bidirectional switching element 44, are connected to each other.

The high-side bidirectional switching element 41 and the low-side bidirectional switching element 44 are connected in series to form a phase-A series circuit. A connection node ND1 between the high-side bidirectional switching element 41 and the low-side bidirectional switching element 44 in the phase-A series circuit is connected to the switch circuit input terminal Pi41.

The respective source terminals of the switching elements S13 and S23, which constitute the high-side bidirectional switching element 43, are connected to each other. The respective source terminals of the switching elements S16 and S26, which constitute the low-side bidirectional switching element 46, are connected to each other.

The high-side bidirectional switching element 43 and the low-side bidirectional switching element 46 are connected in series to form a phase-B series circuit. A connection node ND2 between the high-side bidirectional switching element 43 and the low-side bidirectional switching element 46 in the phase-B series circuit is connected to the switching-circuit input terminal Pi42.

The respective source terminals of the switching elements S15 and S25, which constitute the high-side bidirectional switching element 45, are connected to each other. The respective source terminals of the switching elements S12 and S22, which constitute the low-side bidirectional switching element 42, are connected to each other.

The high-side bidirectional switching element 45 and the low-side bidirectional switching element 42 are connected in series to form a phase-C series circuit. A connection node ND3 between the high-side bidirectional switching element 45 and the low-side bidirectional switching element 42 in the phase-C series circuit is connected to the switching-circuit input terminal Pi43.

The phase-A series circuit, the phase-B series circuit, and the phase-C series circuit are connected in parallel. This parallel connection is referred to as an AC link. Due to the AC link, the switching circuit 40 is configured to include a plurality of bidirectional switching circuits connected in a matrix.

Respective high-side connection nodes of the phase-A series circuit, the phase-B series circuit, and the phase-C series circuit are connected to the switching-circuit output terminal Po1. Respective low-side connection nodes of the phase-A series circuit, the phase-B series circuit, and the phase-C series circuit are connected to the switching-circuit output terminal Po2.

One terminal of the filter inductor 21 is connected to the input terminal PI1. The other terminal of the filter inductor 21 is connected to the connection node ND1 via the switching-circuit input terminal Pi41.

One terminal of the filter inductor 22 is connected to the input terminal PI2. The other terminal of the filter inductor 22 is connected to the connection node ND2 via the switching-circuit input terminal Pi42.

One terminal of the filter inductor 23 is connected to the input terminal PI3. The other terminal of the filter inductor 23 is connected to the connection node ND3 via the switching-circuit input terminal Pi43.

One terminal of the filter capacitor 31 is connected to the connection node ND1. One terminal of the filter capacitor 32 is connected to the connection node ND2. One terminal of the filter capacitor 33 is connected to the connection node ND3. The other terminal of the filter capacitor 31, the other terminal of the filter capacitor 32, and the other terminal of the filter capacitor 33 are connected to each other. Although the present embodiment is directed to an implementation in which the filter capacitor 31, the filter capacitor 32, and the filter capacitor 33 are connected in a star configuration, these filter capacitors may be connected in a delta configuration.

One terminal of the resonant inductor 60 is connected to the switching-circuit output terminal Po1. The other terminal of the resonant inductor 60 is connected to one terminal of a primary-side coil 71 of the transformer 70. The other terminal of the primary-side coil 71 of the transformer 70 is connected to the switching-circuit output terminal Po2. The leakage inductance of the primary-side coil 71 of the transformer 70 may be used as the resonant inductor 60.

The rectifier circuit 81 is connected to a secondary-side coil 72 of the transformer 70.

The rectifier circuit 81 includes a plurality of switching elements S81 and S82, and a plurality of inductors 813 and 814. The switching elements S81 and S82 each correspond to a "rectifier switching element" according to the present invention.

The inductor 813 and the switching element S81 are connected in series. More specifically, the inductor 813 and the drain terminal of the switching element S81 are connected. The connection node between the inductor 813 and the switching element S81 is connected to one terminal of the secondary-side coil 72.

The inductor 814 and the switching element S82 are connected in series. More specifically, the inductor 814 and the drain terminal of the switching element S82 are connected. The connection node between the inductor 814 and the switching element S82 is connected to the other terminal of the secondary-side coil 72.

The series connection of the inductor 813 and the switching element S81, and the series circuit of the inductor 814 and the switching element S82 are connected in parallel. More specifically, the inductor 813 and the inductor 814 are connected, and the source terminal of the switching element S81 and the source terminal of the switching element S82 are connected. The connection node between the source terminal of the switching element S81 and the source terminal of the switching element S82 is connected to a reference potential.

As a result, a second switching circuit is formed. The second switching circuit constitutes a rectifier circuit including the switching elements S81 and S82, which are used for rectification.

The high-side output terminal (corresponding to the connection node between the inductor 813 and the inductor 814) of the rectifier circuit 81 is connected to the high-side DC output terminal POH. The low-side output terminal (the connection node between the source terminal of the switching element S81 and the source terminal of the switching element S82) of the rectifier circuit 81 is connected to the low-side DC output terminal POL.

The output smoothing capacitor 83 is connected between the high-side DC output terminal POH and the low-side DC output terminal POL.

The controller 101 is implemented by, for example, an IC having processing capability such as an MCU. The controller 101 is connected to the switching elements S11 to S16 and S21 to S26. The controller 101 generates control signals for controlling the ON/OFF of the switching elements S11 to S16 and S21 to S26. At this time, the controller 101 generates the control signals based on the results of direct or indirect detection of the output current. The controller 101 synchronizes the control signals for the switching elements S11 to S16 and S21 to S26, and outputs the resulting control signals to the switching elements S11 to S16 and S21 to S26. As a method for indirectly detecting the output current, the controller 101 detects the output current by, for example, detecting the current (input current) flowing through the resonant inductor 60.

According to the configuration mentioned above, the power conversion circuit 10 converts input three-phase AC power into DC power with a predetermined voltage and a predetermined current, and outputs the DC power to the load ZD.

More specifically, the controller 101 performs ON/OFF control (switching control) of the switching elements S11 to S16 and S21 to S26 of the switching circuit 40.

The switching elements S11 to S16 and S21 to S26 of the switching circuit 40 are connected in a matrix due to the circuit configuration mentioned above. The switching elements S11 to S16 are configured to, based on control signals from the controller 101, sequentially transition through ON/OFF operating states.

As a result, the switching circuit 40 converts three-phase AC power at a commercial frequency (60 Hz) into single-phase AC power having a high frequency (a frequency higher than the commercial frequency, such as on the order of tens to hundreds of kHz, e.g., 80 kHz) and used for conversion. The single-phase AC power output by the switching circuit 40 is supplied, as a primary-side AC voltage and a primary-side AC current, to the primary-side coil 71 of the transformer 70 via the resonant inductor 60.

In the secondary-side coil 72 of the transformer 70, a secondary-side output current corresponding to the coefficient of coupling between the primary-side coil 71 and the secondary-side coil 72 is excited, and a secondary-side AC voltage is generated across both ends of the secondary-side coil 72.

The rectifier circuit 81 rectifies the secondary-side output current of the transformer 70. The output smoothing capacitor 83 smooths the rectified current. As a result, the power conversion circuit 10 outputs a desired DC voltage and a desired DC current to the load ZD from the high-side DC output terminal POH and the low-side DC output terminal POL.

An example of a power conversion control method executed by the controller 101 will be described below.

The controller 101 sets six sectors for an input voltage. The duration of each of the six sectors is set by division of one wavelength of the input voltage into six equal parts. For example, for an input voltage vA input to the switching-circuit input terminal Pi41, the timing of the maximum amplitude is set as phase 0°. A first sector is set for a phase range of ±30° centered at phase 0°. A second sector follows the first sector in time sequence, and is set for a phase range of ±30° centered at phase +60°. A third sector follows the second sector in time sequence, and is set for a phase range of ±30° centered at phase +120°.

A fourth sector follows the third sector in time sequence, and is set for a phase range of ±30° centered at phase +180°. A fifth sector follows the fourth sector in time sequence, and is set for a phase range of ±30° centered at phase +240°. A sixth sector SC6 follows the fifth sector SC5 in time sequence, and is set for a phase range of ±30° centered at phase +300°.

Each of the sectors (the first to sixth sectors) is further divided into 30-degree phase ranges.

The controller 101 controls the first to sixth sectors in this order, and subsequently repeats the control while maintaining this order.

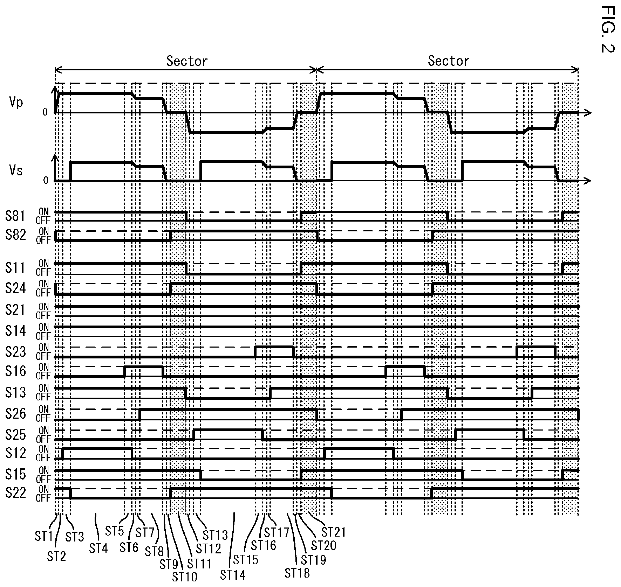

At this time, for each sector, the controller 101 sets, for example, 21 control states as illustrated in Fig. 2. Fig. 2 illustrates an example of the ON/OFF settings of switching elements, an example of a primary-side voltage Vp (design value), and an example of a secondary-side voltage Vs (design value), in a plurality of control states within one sector. The primary-side voltage Vp corresponds to the voltage across both ends of the primary-side coil 71, and the secondary-side voltage Vs corresponds to the voltage across both ends of the secondary-side coil 72.

As illustrated in Fig. 2, the control states define the ON/OFF states of the switching elements S11 to S16 and S21 to S26. The duration of each control state is not necessarily constant. For example, the duration is set based on the target output current (the output current corresponding to the load ZD).

The controller 101 sets the control states ST1 to ST21 for a sector being controlled. During the sector being controlled, the controller 101 performs control in ascending order of the control state numbers, and subsequently repeats the control while maintaining this order.

The controller 101 performs the same or similar control for other sectors.

The control mentioned above allows the switching circuit 40 to convert an input three-phase AC voltage into a single-phase AC voltage at a frequency higher than that of the three-phase AC voltage, and supply the single-phase AC voltage to the primary-side coil 71 of the transformer 70.

After undergoing voltage conversion in the transformer 70, the single-phase AC voltage is output from the secondary-side coil 72, and then rectified in the rectifier circuit 81. This allows the power conversion circuit 10 to supply the load ZD with DC power (a DC voltage and a DC current) whose voltage is constant and whose current is controlled in accordance with the magnitude of the load ZD.

As a normal control, the controller 101 is configured to control synchronous rectification for the rectifier circuit 81.

Further, as a control different from the normal control, the controller 101 is configured to turn off (stop) synchronous rectification when the load ZD is a light load. In other words, the controller 101 is configured to turn off (stop) synchronous rectification when the instantaneous absolute value of the output current (rectified current) within a predetermined period of time or its average value within a predetermined period of time is less than the first threshold.

The controller 101 may be configured to turn off (stop) synchronous rectification based on the primary-side current flowing through the primary-side coil 71 of the transformer 70 (e.g., the current flowing through the resonant inductor 60). In this case, the controller 101 sets a third threshold for the primary-side current, which corresponds to the first threshold for the output current. The controller 101 is configured to turn off (stop) synchronous rectification when the instantaneous absolute value of the primary-side current within a predetermined period of time or the average of the absolute value within a predetermined period of time is less than the third threshold.

To ensure reliable control, the controller 101 is configured to turn off (stop) synchronous rectification when the load ZD is light and the primary-side voltage Vp is less than or equal to a predetermined value including substantially 0 V, for example, 0±5 V (when its absolute value is less than or equal to 5 V). In other words, the controller 101 is configured to turn off (stop) synchronous rectification when the instantaneous value of the output current within a predetermined period of time or the average of the instantaneous value within a predetermined period of time is less than the first threshold value and the primary-side voltage Vp is less than the second threshold value.

The first threshold is set, for example, based on an output current that can be empirically considered to be a light load. The second threshold is set, for example, to a value obtained by the addition, to 0 V, of a margin of error within which the control can be executed reliably.

Without the above-mentioned synchronous rectification control, which is a characteristic feature of the power conversion circuit 10, problems described below occur under light load conditions.

First, for the purpose of comparison with light load conditions, normal conditions will be described, and then the light load conditions will be described.

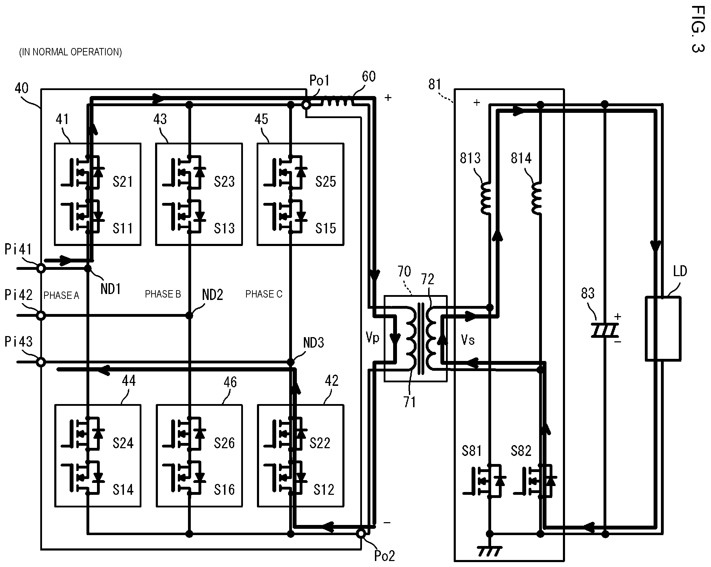

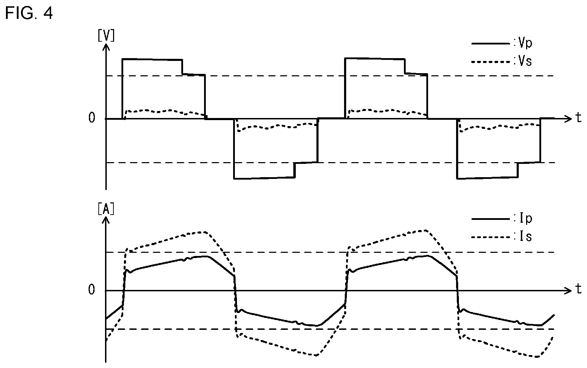

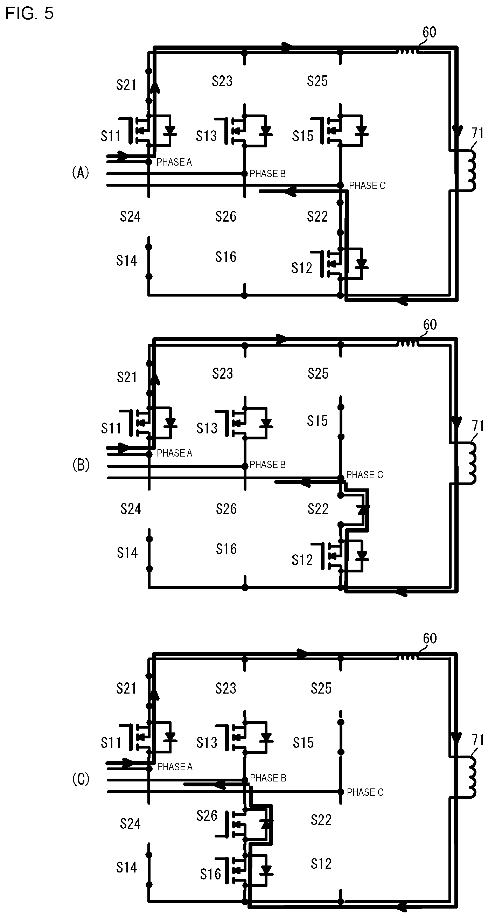

Fig. 3 illustrates an example of normal current flow under non-light load conditions. Fig. 4 is a waveform diagram illustrating an example of the primary- and secondary-side voltages and primary- and secondary-side currents of the transformer under non-light load conditions. Figs. 5(A), 5(B), and 5(C) each illustrate an example of commutation under non-light load conditions.

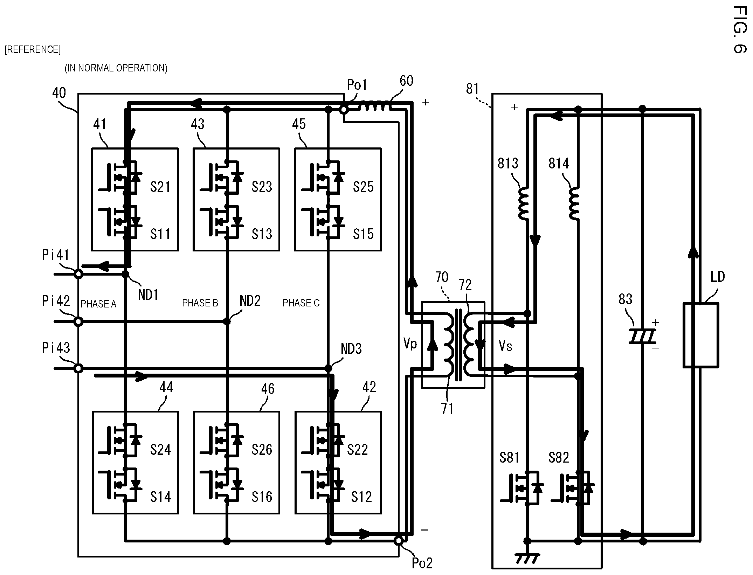

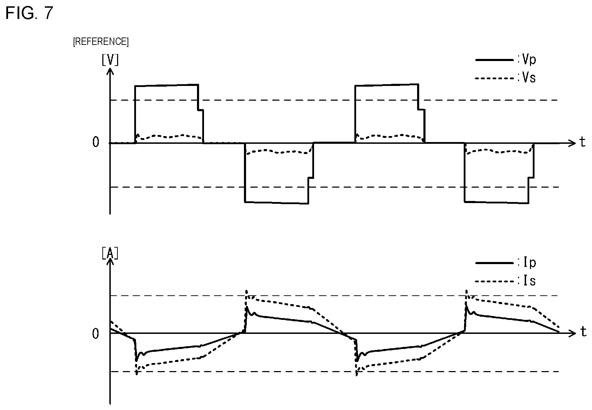

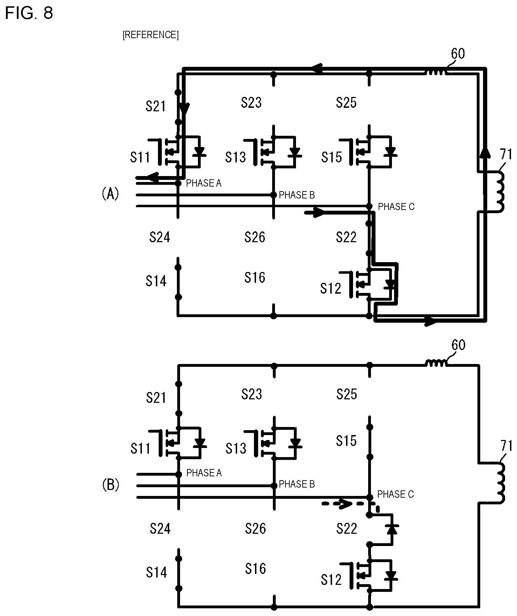

Fig. 6 illustrates an example of abnormal current flow under light load conditions in a reference power conversion circuit. Fig. 7 is a waveform diagram illustrating an example of the primary- and secondary-side voltages and primary- and secondary-side currents of the transformer under light load conditions and when an abnormal current occurs in a reference power conversion circuit. Figs. 8(A) and 8(B) each illustrate an example of a case where it is not possible to perform commutation in a normal manner under light load conditions in a reference power conversion circuit. Each of Figs. 6, 7, 8(A), and 8(B) represents a case using a reference power conversion circuit (a power conversion circuit not configured to perform the control according to the present invention) as opposed to the power conversion circuit 10 according to an embodiment of the present invention, and thus does not represent a state resulting from use of the power conversion circuit 10 according to an embodiment of the present invention.

Figs. 3, 4, 5(A), 5(B), 5(C), 6, 7, 8(A), and 8(B) each illustrate a case where a transition is made from a state in which voltage and current are supplied to the primary-side coil 71 of the transformer 70 via the high-side bidirectional switching element 41 of phase A and the low-side bidirectional switching element 42 of phase C, to a state in which voltage and current are supplied to the primary-side coil 71 of the transformer 70 via the high-side bidirectional switching element 41 of phase A and the low-side bidirectional switching element 46 of phase B. This is an illustrative example, and the same or similar states occur for other combinations of phases as well.

When the load ZD is not light (under normal conditions), as illustrated in Figs. 3 and 5(A), for example, in the rectifier circuit 81 on the secondary side of the transformer 70, current (current in the normal direction) flows through the switching element S82, the secondary-side coil 72 of the transformer 70, and the inductor 813 in this order. In this case, on the primary side of the transformer 70, that is, in the switching circuit 40 as well, current (current in the normal direction) similarly flows through the switching-circuit input terminal Pi41, the high-side bidirectional switching element 41, the resonant inductor 60, the primary-side coil 71 of the transformer 70, the low-side bidirectional switching element 42 of phase C, and the switching-circuit input terminal Pi43 in this order.

In this case, as illustrated in Fig. 4, the sign of the voltage across both ends of the secondary-side coil 72 (the secondary-side voltage Vs), and the sign of the current at both ends of the secondary-side coil 72 (the secondary-side current Is) are the same. The sign of the voltage across both ends of the primary-side coil 71 (the primary-side voltage Vp), and the sign of the current at both ends of the primary-side coil 71 (the primary-side current Ip) are the same.

Therefore, as illustrated in Figs. 5(A), 5(B), and 5(C), the current on the low side can be commutated from phase C to phase B even when ON/OFF control of the switching elements S21 to S26 of the switching circuit 40 is performed in accordance with the pattern illustrated in Fig. 2 described above.

When the load ZD is light, as illustrated in Figs. 6 and 8(A), for example, in the rectifier circuit 81 on the secondary side of the transformer 70, current (current in the abnormal direction) flows through the inductor 813, the secondary-side coil 72 of the transformer 70, and the switching element S82 in this order. This occurs because the rectifier circuit 81 is performing synchronous rectification.

In this case, on the primary side of the transformer 70, that is, in the switching circuit 40, current (current in the abnormal (reverse) direction) flows through the following components in the following order: the switching-circuit input terminal Pi43, the low-side bidirectional switching element 42 of phase C, the primary-side coil 71 of the transformer 70, the resonant inductor 60, the high-side bidirectional switching element 41 of phase A, and the switching-circuit input terminal Pi41. This is because, for example, a negative current may flow due to the ripple superimposed on the output current in a case where the output current decreases under light load conditions.

In this case, as illustrated in Fig. 7, the sign of the voltage across both ends of the secondary-side coil 72 (the secondary-side voltage Vs), and the sign of the current at both ends of the secondary-side coil 72 (the secondary-side current Is) are opposite (inverted) to each other. Likewise, the sign of the voltage across both ends of the primary-side coil 71 (the primary-side voltage Vp), and the sign of the current at both ends of the primary-side coil 71 (the primary-side current Ip) are opposite (inverted) to each other.

Accordingly, as illustrated in Figs. 8(A) and 8(B), when ON/OFF control of the switching elements S21 to S26 of the switching circuit 40 is performed in accordance with the pattern illustrated in Fig. 2 mentioned above, a state where no current flows through the primary-side coil 71 of the transformer 70 occurs before the current on the low-side is commutated to phase B. This makes normal commutation of current impossible.

The inability to perform normal commutation makes it impossible for the reference power conversion circuit to perform power conversion and power supply in a desired manner. Further, the state in Fig. 8(B) may result in an overvoltage being applied to the body of the switching element S22. This may lead to failure of the switching element S22.

Accordingly, as described above, unlike in the normal control, the power conversion circuit 10 according to the present embodiment is configured to turn off (stop) synchronous rectification when the load ZD is light. Further, to ensure reliable control, the controller 101 is configured to turn off (stop) synchronous rectification when the load ZD is light and the secondary-side voltage Vs is substantially 0 V.

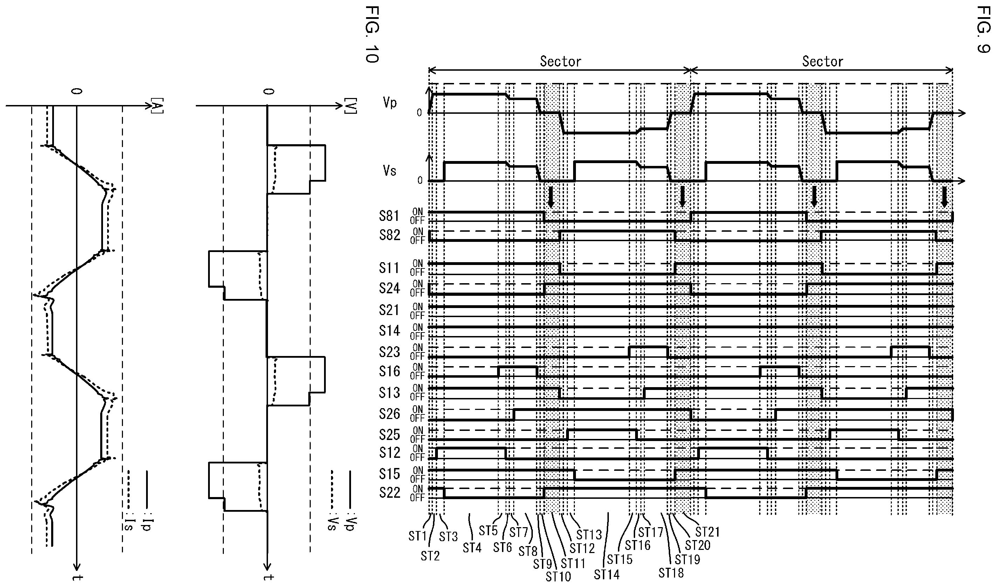

Fig. 9 illustrates an example of the ON/OFF settings of switching elements, an example of the primary-side voltage Vp (design value), and an example of the secondary-side voltage Vs (design value), in a plurality of control states within one sector under light load conditions.

The controller 101 either detects that the load ZD is light (the output current is less than the first threshold), or determines in advance that the load ZD is light. If the load is light, the controller 101 extracts, within a sector, a control state in which the primary-side voltage Vp (design value) is 0 V (the primary-side voltage Vp is less than the second threshold). This configuration can reduce loss more effectively than in the case of a control that uniformly stops synchronous rectification during light load conditions.

The controller 101 turns off synchronous rectification for the extracted control state. More specifically, the controller 101 is configured to, with respect to the extracted control state, turn off (open) a switching element (the switching element S81 or S82) through which the output current flows. For example, the controller 101 is configured to turn off the switching element S81 when the output current is flowing through the switching element S81, and turn off the switching element S82 when the output current is flowing through the switching element S82. The controller 101 may be configured to turn off both switching elements S81 and S82 by taking into account the conditions of the preceding and succeeding control states.

For example, in the case of Fig. 9, the controller 101 extracts the control states ST11 and ST21 in which the primary-side voltage Vp (design value) is 0 V. The controller 101 turns off synchronous rectification for the control states ST11 and ST20.

Fig. 10 illustrates an example of abnormal current flow under light load conditions in the power conversion circuit according to the first embodiment of the present invention. As illustrated in Fig. 10, the sign of the voltage across both ends of the secondary-side coil 72 (the secondary-side voltage Vs), and the sign of the current at both ends of the secondary-side coil 72 (the secondary-side current Is) are the same. Likewise, the sign of the voltage across both ends of the primary-side coil 71 (the primary-side voltage Vp), and the sign of the current at both ends of the primary-side coil 71 (the primary-side current Ip) are the same.

As described above, the power conversion circuit 10 is configured to enable reduction of the above-mentioned abnormal current flowing in the reverse direction on the secondary side.

Further, the power conversion circuit 10 is configured to enable reduction of the above-mentioned abnormal current flowing in the reverse direction on the primary side. This allows the power conversion circuit 10 to reduce the possibility of the inability to execute commutation normally, and reduce the possibility of failure of the switching elements of the switching circuit 40.

The above-mentioned control to turn off synchronous rectification is executed only under light load conditions. Under normal conditions different from the light load conditions, rather than turning off synchronous rectification, the power conversion circuit 10 executes synchronous rectification. This allows for reduced loss in the rectifier circuit 81 under normal conditions.

### [Second Embodiment]

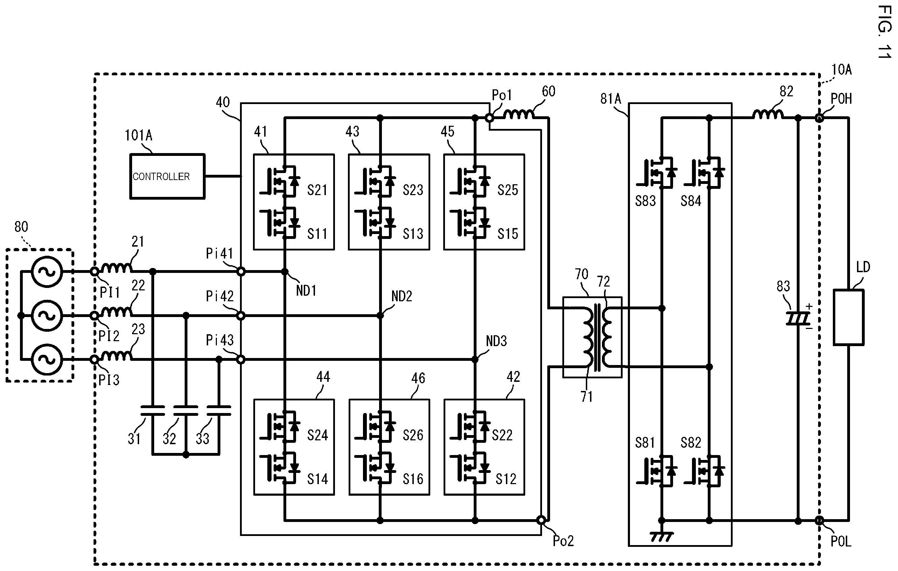

A power conversion circuit according to a second embodiment of the present invention will now be described with reference to the drawings. Fig. 11 is a circuit diagram of the power conversion circuit according to the second embodiment of the present invention.

As illustrated in Fig. 11, a power conversion circuit 10A according to the second embodiment differs from the power conversion circuit 10 according to the first embodiment in the following respects: the configuration of a rectifier circuit 81A, the presence of a smoothing inductor 82, and the control executed by the controller 101. The power conversion circuit 10A is otherwise identical or similar in configuration to the power conversion circuit 10, and a description of such identical or similar features will be omitted.

The power conversion circuit 10A includes, on the secondary side of the transformer 70, the rectifier circuit 81A and the smoothing inductor 82.

The rectifier circuit 81A includes a plurality of switching elements S81, S82, S83, and S84. The switching elements S81, S82, S83, and S84 each correspond to the "rectifier switching element" according to the present invention.

The switching element S83 and the switching element S81 are connected in series. More specifically, the source terminal of the switching element S83 and the drain terminal of the switching element S81 are connected. The connection node between the switching element S83 and the switching element S81 is connected to one terminal of the secondary-side coil 72.

The switching element S84 and the switching element S82 are connected in series. More specifically, the source terminal of the switching element S84 and the drain terminal of the switching element S82 are connected. The connection node between the switching element S84 and the switching element S82 is connected to the other terminal of the secondary-side coil 72.

The series connection of the switching element S83 and the switching element S81, and the series circuit of the switching element S84 and the switching element S82 are connected in parallel. More specifically, the drain terminal of the switching element S83 is connected to the drain terminal of the switching element S84, and the source terminal of the switching element S81 is connected to the source terminal of the switching element S82. The connection node between the source terminal of the switching element S81 and the source terminal of the switching element S82 is connected to a reference potential.

As a result, a second switching circuit is formed. The second switching circuit constitutes a full-bridge rectifier circuit including the switching elements S81, S82, S83, and S84, which are used for rectification.

The high-side output terminal (which corresponds to the connection node between the switching element S83 and the switching element S84) of the rectifier circuit 81A is connected to the high-side DC output terminal POH via the smoothing inductor 82. The low-side output terminal (which corresponds to the connection node between the source terminal of the switching element S81 and the source terminal of the switching element S82) of the rectifier circuit 81A is connected to the low-side DC output terminal POL.

According to the configuration mentioned above, as with the first embodiment, a controller 101A of the power conversion circuit 10A is configured to turn off, among the switching elements S81, S82, S83, and S84 used for rectification, at least a switching element through which an abnormal current flows. This allows the power conversion circuit 10A to provide an operational effect identical or similar to that of the power conversion circuit 10.

### [Control Performed in Switching Synchronous Rectification from OFF to ON]

With the configuration mentioned above, the controller 101A preferably performs a control described below when switching synchronous rectification from OFF to ON.

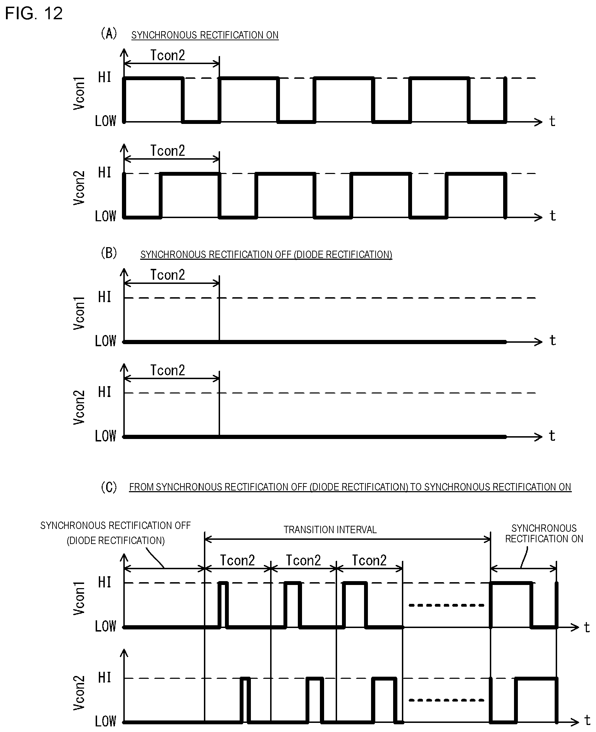

Fig. 12(A) illustrates an example of the waveforms of control signals for rectifier switching elements when synchronous rectification is ON. Fig. 12(B) illustrates an example of the waveforms of control signals for rectifier switching elements when synchronous rectification is OFF. Fig. 12(C) illustrates an example of the waveforms of control signals for rectifier switching elements during switching of synchronous rectification from OFF to ON. Figs. 12(A), 12(B), and 12(C) illustrate example waveforms for combinations of rectifier switching elements that are controlled to alternately turn ON. For example, for the circuit configuration in Fig. 11, Vcon1 is an example of a control signal waveform for the switching element S81 (the switching element S84), and Vcon2 is an example of a control signal waveform for the switching element S82 (the switching element S82).

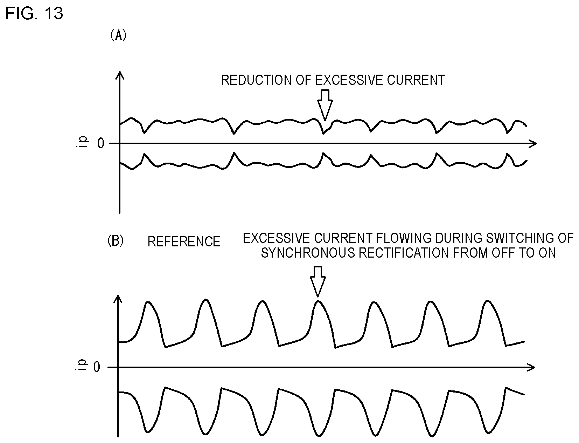

Fig. 13(A) illustrates an example of the envelope of the waveform of the primary-side current of the transformer when the control in Fig. 12(C) is performed. Fig. 13(B) illustrates (as a reference) an example of the envelope of the waveform of the primary-side current of the transformer when the control in Fig. 12(C) is not performed.

As illustrated in Fig. 12(A), in the ON state of synchronous rectification, Vcon1 and Vcon2 are controlled within a control period Tcon2 so as to alternate between HI (switching element ON) and LOW (switching element OFF), with their HI durations partially overlapping each other.

As illustrated in Fig. 12(B), in the OFF state of synchronous rectification (diode rectification state), Vcon1 and Vcon2 are controlled to be always LOW (switching element OFF) within the control period Tcon2.

As illustrated in Fig. 12(C), a transition interval is set for switching of synchronous rectification from the OFF state (diode rectification state) to the ON state. During the transition interval, Vcon1 and Vcon2 are controlled such that their HI durations gradually increase within the control period Tcon2.

The output voltage rises sharply at the time when synchronous rectification is switched from the OFF state (diode rectification state) to the ON state. If the control in Fig. 12(C) is not performed, an excessive current flows through the transformer 70 due to the sharp rise in output voltage. For example, as illustrated in the reference diagram of Fig. 13(B), the primary-side current ip of the transformer 70 significantly increases. Depending on the situation, this may lead to oscillations during switching.

Executing the control in Fig. 12(C) helps to reduce the possibility of current abruptly flowing through the transformer 70. For example, as illustrated in Fig. 13(A), the control helps to mitigate an abrupt increase in the primary-side current ip of the transformer 70.

### [Third Embodiment]

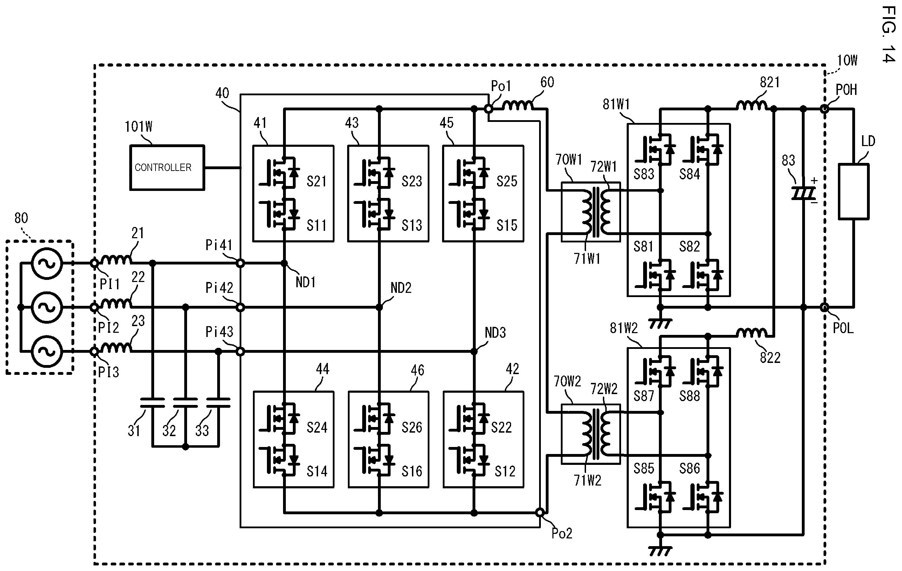

A power conversion circuit according to a third embodiment of the present invention will now be described with reference to the drawings. Fig. 14 is a circuit diagram of the power conversion circuit according to the third embodiment of the present invention.

As illustrated in Fig. 14, a power conversion circuit 10W according to the third embodiment differs from the power conversion circuit 10A according to the second embodiment in that the power conversion circuit 10W includes two transformers 70W1 and 70W2, two rectifier circuits 81W1 and 81W2, and two smoothing inductors 821 and 822.

The transformer 70W1 includes a primary-side coil 71W1 and a secondary-side coil 72W1. The transformer 70W2 includes a primary-side coil 71W2 and a secondary-side coil 72W2.

The primary-side coil 71W1 and the primary-side coil 71W2 are connected in series between the switching-circuit output terminal Po1 and the switching-circuit output terminal Po2.

The secondary-side coil 72W1 is connected to the rectifier circuit 81W1. The secondary-side coil 72W2 is connected to the rectifier circuit 81W2.

The rectifier circuit 81W1 is implemented by use of the switching element S81, the switching element S82, the switching element S83, and the switching element S84. The rectifier circuit 81W1 is connected with the smoothing inductor 821.

The rectifier circuit 81W2 is implemented by use of the switching element S85, the switching element S86, the switching element S87, and the switching element S88. The rectifier circuit 81W2 is connected with the smoothing inductor 822.

The output terminal of a circuit including the rectifier circuit 81W1 and the smoothing inductor 821, and the output terminal of a circuit including the rectifier circuit 81W2 and the smoothing inductor 822 are connected in parallel.

The rectifier circuit 81W1 and the rectifier circuit 81W2 are identical or similar in configuration to the rectifier circuit 81A according to the second embodiment. The controller 101W is configured to execute, for the rectifier circuit 81W1 and the rectifier circuit 81W2, an ON/OFF control identical to or similar to that for the rectifier circuit 81A.

The above-mentioned configuration allows the power conversion circuit 10W to provide an operational effect identical or similar to that of the power conversion circuit 10A. The above-mentioned configuration also allows the power conversion circuit 10W to handle lower voltages and larger currents.

### Reference Signs List

10, 10A, 10W power conversion circuit
21, 22, 23 filter inductor
31, 32, 33 filter capacitor
40 switching circuit
41, 43, 45 high-side bidirectional switching element
42, 44, 46 low-side bidirectional switching element
60 resonant inductor
70, 70W1, 70W2 transformer
71, 71W1, 71W2 primary-side coil
72, 72W1, 72W2 secondary-side coil
80 three-phase AC power source
81, 81A, 81W1, 81W2 rectifier circuit
82 smoothing inductor
813, 814 inductor
83 output smoothing capacitor
101, 101A, 101W controller
LD load
ND1, ND2, ND3 connection node
PI1, PI2, PI3 input terminal
Pi41, Pi42, Pi43 switching-circuit input terminal
Po1, Po2 switching-circuit output terminal
POH high-side DC output terminal
POL low-side DC output terminal
S11 to S16, S21 to S26 switching element
S81 to S84, S85-S88 switching element

## Claims

1. A power conversion circuit comprising:
a first switching circuit including a plurality of bidirectional switches and configured to convert a three-phase AC voltage;
a transformer including a primary-side coil and a secondary-side coil, the primary-side coil being connected to an output of the first switching circuit;
a second switching circuit including a rectifier switching element and configured to output a DC voltage;
a capacitor and an inductor that are connected to an output terminal of the second switching circuit; and
a controller configured to control the first switching circuit and the second switching circuit,
wherein the controller is configured to, when an output current of the second switching circuit is less than a first threshold, turn off synchronous rectification for the rectifier switching element of the second switching circuit.

2. The power conversion circuit according to Claim 1,
wherein the output current is a current flowing through the inductor, and
wherein the controller is configured to turn off the synchronous rectification when the current flowing through the inductor is less than the first threshold.

3. The power conversion circuit according to Claim 1 or 2,
wherein the first switching circuit includes an AC link, the AC link including a parallel connection of
a first series circuit including a first high-side bidirectional switching element and a first low-side bidirectional switching element,
a second series circuit including a second high-side bidirectional switching element and a second low-side bidirectional switching element, and
a third series circuit including a third high-side bidirectional switching element and a third low-side bidirectional switching element, and
wherein the controller is configured to
set a plurality of control states that determine ON/OFF of the first high-side bidirectional switching element, the first low-side bidirectional switching element, the second high-side bidirectional switching element, the second low-side bidirectional switching element, the third high-side bidirectional switching element, and the third low-side bidirectional switching element, and
turn off the synchronous rectification based on a control state in which a voltage applied to the AC link is at a minimum.

4. The power conversion circuit according to Claim 2 or 3,
wherein the controller is configured to turn off the synchronous rectification based on a control state in which a voltage applied to the primary-side coil of the transformer is at a minimum.

5. The power conversion circuit according to any one of Claims 2 to 4,
wherein the controller is configured to turn off the synchronous rectification when an absolute value of a voltage across both ends of the primary-side coil is less than a second threshold.

6. The power conversion circuit according to Claim 5,
wherein the controller is configured to turn off the synchronous rectification when the voltage across the both ends of the primary-side coil is less than or equal to a predetermined value.

7. The power conversion circuit according to any one of Claims 1 to 6,
wherein the controller is configured to turn off the synchronous rectification when an instantaneous absolute value of the output current is less than the first threshold.

8. The power conversion circuit according to Claim 7,
wherein the controller is configured to turn off the synchronous rectification when an average of an instantaneous absolute value of the output current is less than the first threshold.

9. The power conversion circuit according to any one of Claims 1 to 8,
wherein the rectifier switching element comprises a switching element including a body diode, and
wherein the controller is configured to, as the turning off of the synchronous rectification, turn off a switching element through which the output current flows.

10. The power conversion circuit according to any one of Claims 1 to 9,
wherein the controller is configured to
set a transition interval in which the synchronous rectification is switched from an OFF state to an ON state, and
during the transition interval, gradually increase an ON duration of the rectifier switching element.

11. The power conversion circuit according to any one of Claims 1 to 10,
wherein the controller is configured to turn off the synchronous rectification when a primary-side current corresponding to the output current is less than a third threshold corresponding to the first threshold.

12. The power conversion circuit according to Claim 11,
wherein the controller is configured to turn off the synchronous rectification when an instantaneous absolute value of the primary-side current is less than the third threshold.

13. The power conversion circuit according to Claim 11,
wherein the controller is configured to turn off the synchronous rectification when an average of an instantaneous absolute value of the primary-side current is less than the third threshold.
